Europäisches Patentamt

European Patent Office

Office européen des brevets

(19)

(11) Publication number: **0 388 237**
**A2**

# EUROPEAN PATENT APPLICATION

(21) Application number: 90302887.6

(22) Date of filing: 16.03.90

(51) Int. Cl.⁵: **A23L 1/29**

(30) Priority: **17.03.89 GB 8906158**

(43) Date of publication of application:
**19.09.90 Bulletin 90/38**

(84) Designated Contracting States:
**AT BE CH DE DK ES FR GB GR IT LI LU NL SE**

(71) Applicant: **POWELL & SCHOLEFIELD LTD**
**38 Queensland Street**
**Liverpool L7 3JG(GB)**

(72) Inventor: **O'Donnell, Maura**
**93 St. Helens Road**
**Prescot, Liverpool 34, Merseyside(DE)**
Inventor: **Robinson, Susan Christine**
**I161 Mather Avenue**
**Liverpool L48 6JZ(GB)**

(74) Representative: **McCall, John Douglas et al**
**W.P. THOMPSON & CO. Coopers Building**
**Church Street**
**Liverpool L1 3AB(GB)**

(54) **Dietary product.**

(57) A dietary product designed for people who need special dietary provisions. The product comprises as its basis a blend of carbohydrates, fat, an emulsifier and where desired, a flavouring. It is substantially protein free although known amino acids and other supplements may be added to provide for specific dietary requirements. It can be made into bar form and/or used to coat, or enrobe other supplements. In particular there are forms of the product which can be used for phenylketonuria sufferers or patients with renal problems.

## DIETARY PRODUCT

The present invention relates to a dietary product and in particular to a dietary product for use by, or for, people who have problems which are caused by, or are affected by, diet.

The present invention seeks to provide a dietary product which can be used per se, or which can be used as a basis for a foodstuff.

Some people suffer from inborn errors of metabolism such that they cannot properly metabolize proteins or their constituent amino acids. A specific group of such individuals are people who suffer from phenylketonuria. Sufferers from phenylketonuria are unable to utilise the amino acid, phenylalanine. The dietary intake of such individuals has to be very carefully controlled so as to ensure that the amount of phenylalanine in the diet does not exceed the amount required by the body. Failure to control the intake of phenylalanine can result in permanent brain damage to such patients.

The present invention seeks to provide a dietary product for use by people suffering from phenylketonuria and other inborn errors of metabolism. Other diseases as a result of inborn errors of metabolism include Maple Syrup Urine disease.

Another group of individuals who suffer from problems caused by, or affected by, diet are those who have allergenic reaction to various foodstuffs. Such allergenic reaction is very often a reaction to one or more protein products and the present invention seeks to provide a basis for a foodstuff for such individuals and also a basis for a foodstuff testing medium for such individuals.

Another group of individuals for whom the present invention may be of use are those suffering from gastric disorders as a result of dietary malabsorption e.g. Crohn's disease.

Most naturally occuring food sources contain a quantity of protein therein, and people suffering from problems such as those described above therefore have to take a high proportion of their food in the form of specially prepared dietary products, which products are substantially protein free.

However, these products are only available in powders, and have to be dissolved prior to consumption. Thus there is no product available which can be consumed in a solid form. This is unsatisfactory, since there are many occasions when a patient may require food, but will not be able to eat due to the restriction or inaccessability of water supply.

According to the present invention there is provided a solid dietary product characterised in that it consists essentially of a blend of:

(i) carbohydrate,

(ii) fat, and

(iii) emulsifier, which blend is protein free or substantially protein free.

Optionally a flavouring may be added.

By "protein free or substantially protein free" it is to be understood that the product contains either no protein at all or contains protein in an amount of no more than 0.5% by weight based on the total weight of carbohydrate, fat and emulsifier.

The expression "solid" is intended to mean a product which is consumable in solid form.

The dietary product of the present invention provides a solid protein free or substantially protein free food product of high calorific value.

The carbohydrate is preferably sugar or maltodextrin, suitably ground. The expression maltodextrin as used throughout the specification including the claims is intended to include glucose syrup.

The fat is preferably a hardened fat such as hydrogenated soya bean oil, hydrogenated cotton seed oil, hydrogenated rapeseed oil, hydrogenated palm oil or hydrogenated palm kernel oil. The fat is preferably predominantly composed of triglycerides of fatty acid chain length C16 and C18. A suitable trans-isomeric fatty acid content is 35% to 80% , a suitable iodine value is 40% to 75%.

The emulsifying agent is preferably lecithin or a lecithin substitute.

In order to make the dietary product more palatable one or more protein free flavourings, either natural or artificial) is preferably included in the dietary product of the invention.

The flavouring when present may be any suitable natural or synthetic flavouring. Suitable examples include vanilla and fruit essence or fruit pulp subject to its protein content being such that the final product is protein free or substantially protein free.

The essential components of the dietary product of the invention are preferably mixed in the ranges indicated below :-

| ingredient | weight % |
|---|---|
| carbohydrate e.g. pulverised sugar | 35-74.8% |
| fat e.g. hardened fat | 25-64.8% |
| emulsifier e.g. lecithin | 0.2-1% |

For use in connection with phenylketonuria a most preferred composition for the dietary product comprises 56% pulverised sugar, 43.4% hardened fat and 0.6% lecithin. A flavouring may also be added.

The dietary product may be used per se or it may be used to coat and/or bind a food source to be ingested. A food source may thus be admixed with the dietary product of the invention or it may be coated or enrobed with the dietary product of the invention or a food source admixed with a dietary product of the invention may then be coated or enrobed with a dietary product of the invention.

For coating or enrobing the fat content is usually lower than for other purposes and preferably is in the region of 30 to 35% but can be lower or higher. For forming a moulded dietary product of the invention the figure is preferably 35 to 65% but can be higher or lower.

The most preferred composition of the dietary product of the invention when it is to be used for coating or enrobing is 65.2% carbohydrate, 33% fat, 0.8% emulsifier and 1.0% flavouring and the most preferred composition of the dietary product of the invention when it is to be used to form a moulded product admixed with other ingredients to 56.5% carbohydrate, 42.0% fat, 0.5% emulsifier and 1.0% flavouring.

Use of the dietary product of the invention to coat (or enrobe) another food source or to bind another food source is important for various purposes.

Firstly since the dietary product of the invention is protein free or substantially protein free, the requisite amount of protein for a particular diet may be incorporated into the dietary product either by binding the protein into the dietary product of the invention or by enrobing (or coating) the protein with the dietary product of the invention. Similarly other dietary constituents such as vitamins and minerals may be mixed with, or coated with, the dietary product of the invention. Secondly the taste of a food ingredient which the person needs to ingest for dietary or testing purposes may be masked by the dietary product of the invention.

In one embodiment a solid food product comprises a food source to be ingested, which food source is coated by, and/or bound together by, a dietary product of the invention.

The invention thus provides in one embodiment a solid food product comprising other food ingredients, e.g. essential dietary constituents such as amino acids, vitamins and minerals, coated by, and/or bound together by, a dietary product of the invention.

Where the final product comprises other food ingredients bound by the dietary product of the invention, the relative proportions of the ingredients are preferably as follows :-

| | % by weight |
|---|---|
| dietary product of the invention | 50-99.9% (more preferably 50-95%) |
| other ingredients | 0.1-50% (more preferably 5 - 50%) |

For use by people suffering from phenylketonuria or other disorders of metabolism, the relative proportions of the dietary product of the invention and the other ingredients is preferably as follows:-

| | % by weight |
|---|---|
| dietary food product of the invention | 50-90% |
| other ingredients | 10-50% |

For people suffering from renal problems the relative proportions of the dietary product of the invention and the amino acid/keto acid mixture is preferably as follows :-

EP 0 388 237 A2

|  | % by weight |
|---|---|
| dietary food product of the invention | 60-95% |
| amino acid/keto acid mixture | 5-40% |

In one embodiment the essential dietary constituents can be mixed with suitable thickening agents to produce a core mass which can then be enrobed with the blend e.g. to form a bar.

One flavouring which for use in the dietary type composition of the invention is especially preferred is a vanilla flavouring thereby producing a dietary chocolate substitute product.

Such a product is particularly advantageous for those people who are allergic to normal chocolate or the constituents thereof. Such a product can be produced in a form which is protein free or substantially protein free and also free from, or low in, phosphorus for those people, particularly children who have renal disease and therefore who are on a diet restricted in protein, liquid and phosphorous. Such a snack is of particular utility since the product is high in calories and the present diets of renal patients tend to be deficient in energy.

The benefit of such a product may be enhanced by the addition of pure amino acids in suitable quantities, particularly the essential amino acids or the keto analogues of same. This has the effect of enhancing the quality of protein intake of such patients.

In accordance with another aspect of the present invention there is provided a chocolate substitute comprising a dietary product of the invention in which a flavouring is present. Such product may optionally be used to enrobe or bind other food ingredients.

For a chocolate substitute, the dietary product of the invention preferably has the following composition:-

| ingredient | weight % |
|---|---|
| carbohydrate e.g. pulverised sugar | 35-60% |
| fat e.g. hardened fat | 35-65% |
| emulsifier e.g. lecithin | 0.2-1% |
| flavouring e.g. vanilla | 0.1-1% |

A most preferred composition for a dietary product of the invention for use as a chocolate substitute is 56.5% by weight of pulverised sugar, 42.0% by weight of hardened fat, 0.5% by weight of lecithin and 1.0% by weight of flavouring.

In another aspect of the invention, the dietary product of the invention provides an important aid as a dietary diagnostic. Since the dietary product of the invention is protein free, or substantially protein free, and most allergens are proteins or their constituents, the product is for most purposes an essentially allergen-free product. It can therefore be used to disguise allergens so that accurate clinical tests can be conducted to determine whether a patient is or is not allergic to the particular compound under test. Currently, no suitable methods are available. Since it has not been possible to disguise the compound under test, a person who believes he is allergic to a particular compound may produce an allergic response as a result of visual, taste or olfactory stimulation, rather than due to its intake.

The dietary product of the invention can thus be used to enrobe and/or bind a particular allergen so that the subjects reaction to that allergen can be determined. A whole series of tests can be carried out using different allergens.

According to the present invention therefore there is provided an allergenic test product comprising an allergen enrobed by and/or bound in, a dietary product of the present invention.

Use of the dietary product of the invention as a coating, masks any unpalatable taste of the coated foodstuff and extends shelf-life.

It has been found that one way of producing the products discussed which comprise the dietary product of the invention and other ingredients coated by and/or bound by the dietary product of the invention is to spray coat the products to be incorporated into the final product (e.g. a bar) with the dietary product of the invention thereby making them miscible with the dietary product of the invention, and then saturating the coated product with the dietary product of the invention.

4

The dietary product of the invention may be manufactured in a very similar manner to chocolate, e.g. by conching and refining, but the ingredients used are those referred to above, i.e. carbohydrate, fat, emulsifier and optionally flavouring.

"Conching" is a method of mixing (e.g. shear mixing) whilst applying heat and "refining" is a continuation of such mixing and heating to achieve a desired particle size.

Conching and refining is carried out e.g. at 45°C to 65°C for about 3 to 24 hours. The mass can then be used immediately and either moulded for use per se or used for enrobing (or coating), or further mixing with, other food products. Alternatively the product may be cooled and then subsequently moulded for use per se or for enrobing (or coating) or mixing with other food products.

Moulding is preferably carried out at a mould temperature of 40°C to 50°C and the product is preferably subjected to cooling for up to 60 minutes preferably up to 10 minutes at a temperature of 6°C to 8°C.

Enrobing is preferably carried out with the mass kept at 35°C to 45°C preferably 38°C to 40°C, with the core mass to be enrobed at e.g. 18°C to 23°C. The product is then preferably cooled at 10°C to 12°C for 0 to 10 minutes preferably 6½ to 7 minutes.

Mixing is preferably carried out at 37°C to 40°C within a heated, jacketed, low shear stirrer, for 3 to 30 minutes before moulding the resultant mass as above.

The invention will now be further described by illustrative example only :-

## EXAMPLE 1

A mixture of 56% by weight pulverised sugar, 43.4% by weight hardened fat, and 0.6% lecithin was prepared and flavouring added. The mixture was subjected to a refining process similar to that for chocolate and then a conching process at 65°C to 80°C for between 8 and 24 hours. The mass was then cooled to 40°C to 80°C. 53% by weight of the resulting dietary product was then admixed at 37°C to 40°C in a heated low sheer stirrer for 3 to 30 minutes, with the following :-

|  | % by weight |
| --- | --- |
| lysine-glutamate | 5.55% |
| leucine | 3.36% |
| aspartic acid | 3.02% |
| tyrosine | 3.02% |
| dibasic Ca phosphate | 2.92% |
| proline | 2.66% |
| Na citrate | 2.27% |
| vitamine mixture | 2.17% |
| valine | 2.12% |
| histidine | 2.10% |
| arginine | 2.10% |
| iso leucine | 1.95% |
| glycine | 1.87% |
| threonine | 1.67% |
| Mg hydrogen phosphate | 1.51% |
| tri potassium citrate | 1.41% |
| serine | 1.38% |
| trace element mixture | 1.31% |
| alanine | 1.10% |
| potassium chloride | 1.06% |
| tryptophan | 0.83% |
| cystine | 0.77% |
| methionine | 0.75% |
| Ca citrate | 0.10% |

The resulting product was moulded into a bar shape at a mould temperature of 6°C to 8°C followed by cooling for 20 to 30 minutes. The bar obtained was suitable for use by persons suffering from phenyl-

5

ketonuria. Products used by people suffering from other disorders of metabolism may be similarly produced by using amino acid composition variations to suit the particular disease. Such diseases include inherited disorders such as Maple Syrup Urine Disease, and other disorders such as Hepatic Disease.

## EXAMPLE 2

A flavoured dietary product was prepared by refining, conching and moulding in a similar manner to Example 1 from the following ingredients :-

| Ingredient | % by weight |
|---|---|
| Pulverised sugar | 53% |
| Hardened fat | 41.4% |
| Lecithin | 0.3% |
| Flavouring | 5% |

The flavouring is, for example, any artificial or natural identical flavour such as vanilla, or can be any low protein natural flavour such as fruit essence or fruit pulp.

## EXAMPLE 3

A product was prepared by a method similar to that of Example 1. The basic dietary product consisted of 53% by weight pulverised sugar, 41.4% by weight hardened fat, 0.3% lecithin, and 5% flavouring. 80% of this mixture was admixed with 20% of an amino acid mixture and moulded as per Example 1. The amino acid mixture had the following composition :-

| | % by weight |
|---|---|
| lysine | 15% |
| leucine | 17.1% |
| iso leucine | 11% |
| tyrosine | 10% |
| phenylalanine | 6% |
| threonine | 12% |
| tryptophan | 2.5% |
| methionine | 4% |
| cystine | 4% |
| histidine | 4% |
| valine | 15.4% |

The product was useful for people suffering from renal disorders.

## EXAMPLE 4

A product was made in similar manner to Example 3 but the amino acid mixture was replaced by the following keto acid mixture :-

| lysine acetate | 16.5% |
|---|---|
| threonine | 8.5% |
| histidine | 6% |
| tyrosine | 4.6% |
| keto-valine | 14.2% |
| keto-leucine | 15.5% |
| keto-iso-leucine | 11% |
| keto phenylalanine | 11% |
| hydroxy-methionine | 9% |

The product was useful for use by patients suffering from renal disorders.

EXAMPLE 5

A dietary product in accordance with the invention was prepared as per Example 1, from 56% by weight pulverised sugar, 43.4% by weight hardened fat and 0.6% lecithin. This basic dietary product was then admixed with various allergens as set out below and moulded as per Example 1 to produce a series of products for allergen testing.

| A. for testing against wheatflour :- | |
|---|---|
| basic dietary product | 37.5 gm |
| wheatflour | 12.5 gm |
| total | 50 gm |

| B. for testing against cornflour :- | |
|---|---|
| basic dietary product | 37.5 gm |
| cornflour | 12.5 gm |
| total | 50 gm |

| C. for testing against milk :- | |
|---|---|
| basic dietary product | 37.31 gm |
| whole milk power | 12.69 gm |
| total | 50 gm |

| D. for testing against yeast :- | |
|---|---|
| basic dietary product | 47.6 gm |
| yeast | 2.4 gm |
| total | 50 gm |

7

| E. for testing against rice :- | |
|---|---|
| basic dietary product | 37.5 gm |
| ground rice | 12.5 gm |
| total | 50 gm |

| F. for testing against potato :- | |
|---|---|
| basic dietary product | 37.5 gm |
| potato flour | 12.55 gm |
| total | 50 gm |

| G. for testing against oats :- | |
|---|---|
| basic dietary product | 37.5 gm |
| oat flour | 12.5 gm |
| total | 50 gm |

| H. for testing against egg :- | |
|---|---|
| basic dietary product | 43.17 gm |
| egg powder | 6.83 gm |
| total | 50 gm |

All the aforementioned weights given in grams are values per 50g of product.

EXAMPLE 6

A chocolate product with added minerals was prepared in a similar manner to the method described in Example 1. The product had the following formulation :-

| Formulation | % by weight |
|---|---|
| Carbohydrate (pulverised sugar) | 54.344 |
| Fat (hardened fat) | 33.0 |
| Flavouring | 1.0 |
| Lecithin | 0.6 |
| Dibasic Calcium Phosphate | 7.98 |
| Magnesium Hydrogen Phosphate | 3.076 |

The first four ingredients comprise the basic dietary product. The remaining ingredients provide the added mineral. The product contained no protein and had an energy value of 520 Kcals. Amounts of added Calcium Phosphate and Magnesium are set out below :-

8

| Calcium | 1859 MGM |
| Phosphorous | 1983 MGM |
| Magnesium | 429 MGM |

The product was found to be useful for a coating or enrobing for a bar type product in which the food source is coated or enrobed by the product mentioned above.

## EXAMPLE 7

A product was prepared by a method as outlined in Example 1 but without moulding, from the following ingredients :-

| Ingredient | |
| --- | --- |
| Pulverised sugar | 56g |
| Fat | 31.0g |
| Flavour | 1.0g |
| Lecithin | 0.6g |
| Dibasic Calcium Phosphate | 7.98g |
| Magnesium Hydrogen Phosphate | 3.076g |

This product which comprises the dietary product of the invention admixed with minerals was suitable as a material for coating or enrobing another food source.

## EXAMPLE 8

A dietary product in accordance with the invention was prepared by a method as outlined in Example 1 from the following :-

| Ingredient | % by weight |
| --- | --- |
| Pulverised sugar | 56.4% |
| Fat | 42.0% |
| Flavour | 1.0% |
| Lecithin | 0.6% |

It will be appreciated that many variations on the final product are possible.

## Claims

1. A solid dietary product characterised in that it consists essentially of a blend of:
(i) carbohydrate,
(ii) fat, and
(iii) emulsifier,
which blend is protein free or substantially protein free.

2. A dietary product as claimed in claim 1, which further comprises a flavouring.

3. A dietary product as claimed in claim 1 or 2, wherein the carbohydrate is at least one selected from the group consisting of sugar and maltodextrin, suitably ground.

4. A dietary product as claimed in any of the preceding claims wherein the fat is at least one hardened fat selected from the group consisting of hydrogenated soya bean oil, hydrogenated cotton seed oil, hydrogenated rapeseed oil, hydrogenated palm oil or hydrogenated palm kernel oil.

5. A dietary product as claimed in any of the preceding claims wherein the fat is predominantly composed of triglycerides of fatty acid chain length C16 and C18, having a trans-isomeric fatty acid content of 35% to 80% and an iodine value of 40% to 75%.

6. A dietary product as claimed in any of the preceding claims wherein the emulsifying agent is at least one selected from the group consisting of lecithin or a lecithin substitute.

7. A dietary product as claimed in any of the preceding claims comprising:

| ingredient | weight % |
|---|---|
| carbohydrate | 35-74.8% |
| fat | 25-64.8% |
| emulsifier | 0.2-1% |

8. A dietary product as claimed in any of the preceding claims, for use in connection with phenylketonuria, comprising 56% pulverised sugar, 43.4% hardened fat and 0.6% lecithin.

9. A food product comprising a food source admixed, coated or enrobed with, a dietary product as claimed in any of claims 1 to 7.

10. A food product comprising a food source admixed with a dietary product as claimed in any of claims 1 to 7, and then enrobed with a dietary product as claimed in any of claims 1 to 7.

11. A food product comprising a food source admixed with a dietary product as claimed in any of claims 1 to 7 wherein the fat content of the solid dietary product is from 35 to 65%.

12. A food product as claimed in claim 9, 10 or 11 in which the food source is selected from the group consisting of amino acids, vitamins and minerals.

13. A food product as claimed in any of claims 9 to 12 wherein the relative proportions of the ingredients are as follows:-

| | % by weight |
|---|---|
| solid dietary product | 50-99.9% |
| other food source | 0.1-50% |

14. A food product as claimed in claim 13, for use by people suffering from phenylketonuria or other disorders of metabolism, wherein the relative proportions of the ingredients are as follows:-

| | % by weight |
|---|---|
| solid dietary product | 50-90% |
| other ingredients | 10-50% |

15. A food product as claimed in claim 13, for use by people suffering from renal problems, wherein the other food source is an amino acid/keto acid mixture and the relative proportions of the ingredients are follows:-

| | % by weight |
|---|---|
| solid dietary product | 60-95% |
| amino acid/keto acid mixture | 5-40% |

16. A dietary product as claimed in any of claims 1 to 7 which is a chocolate substitute product, consisting essentially of the following

| ingredient | weight % |
| --- | --- |
| pulverised sugar | 35-60% |
| hardened fat | 35-65% |
| lecithin | 0.2-1% |
| vanilla | 0.1-1% |

17. A dietary product as claimed in claim 16 consisting essentially of 56.5% by weight of pulverised sugar, 42.0% by weight of hardened fat, 0.5% by weight of lecithin and 10% by weight of flavouring.

18. An allergenic test product comprising an allergen enrobed by and/or bound in, a dietary product as claimed in any of claims 1 to 7.

19. An allergenic test product as claimed in claim 18, wherein the allergen is selected from the group consisting of wheatflour, cornflour, milk, yeast, rice, potato, oats and egg.

20. A method of making a product as claimed in any of the preceding claims which comprises admixing the carbohydrate fat, and emulsifier conching, refining, and cooling.

21. A method as claimed in claim 20, wherein flavouring is included in the admixture.

22. A method as claimed in claim 20 or 21 wherein conching and refining is carried out at 45°C to 65°C for about 3 to 24 hours.